# EUROPÄISCHE PATENTSCHRIFT

(11) **EP 3 318 852 B1**
(45) Veröffentlichungstag und Bekanntmachung des Hinweises auf die Patenterteilung: **30.12.2020**
(21) Anmeldenummer: 17198729.0
(22) Anmeldetag: 27.10.2017
(51) Int. Cl.: G01G 19/00, G01G 19/414

(54) **VERFAHREN ZUR LÄNGENMESSUNG EINES FLACHEN GUTES IN EINEM GUTVERARBEITUNGSSYSTEM UND ANORDNUNG ZUR DURCHFÜHRUNG DES VERFAHRENS**
METHOD FOR LENGTH MEASUREMENT OF A FLAT GOOD IN A GOODS PROCESSING SYSTEM, AND ARRANGEMENT FOR IMPLEMENTATION OF THE METHOD
PROCÉDÉ DE MESURE DE LONGUEUR D'UN PRODUIT PLAT DANS UN SYSTÈME DE TRAITEMENT DES PRODUITS ET DISPOSITIF DE MISE EN UVRE DUDIT PROCÉDÉ

(30) Priorität: 01.11.2016 DE 202016106125 U; 01.07.2017 DE 102017006270
(43) Veröffentlichungstag der Anmeldung: 09.05.2018
(73) Patentinhaber: Francotyp-Postalia GmbH, 13089 Berlin (DE)
(72) Erfinder: GESERICH, Frank, 16515 Friedrichsthal (DE); BAUM, Volker, 13189 Berlin (DE)

(56) Entgegenhaltungen:
- US-A- 5 373 363
- US-A- 5 990 422

## Beschreibung

Die Erfindung betrifft ein Verfahren zur Längenmessung eines flachen Gutes in einem Gutverarbeitungssystem gemäß dem Oberbegriff des Patentanspruchs 1 und Anordnung zur Durchführung des Verfahrens gemäß dem Oberbegriff des Patentanspruchs 6

In einem Gutverarbeitungssystem werden Stationen für auf der Seite liegend transportierte flache Güter angeordnet, wie eine automatische Zuführstation, eine dynamische Waage und weitere in Transportrichtung nachfolgende Stationen. In der automatischen Zuführstation und/oder der dynamischen Waage werden Dimensionsmessungen durchgeführt.

Die Poststraße eines Frankiersystems besteht in üblicher Weise aus einer Vielzahl von einzelnen aneinandergereihten Poststückverarbeitungsstationen. Die Stationen der Poststraße eines Frankiersystems können jeweils als modulare Station ausgebildet sein.

Die auf der Seite liegend transportierten flachen Güter sind beispielsweise Poststücke, wie kuvertierte Briefe oder Postkarten. Wenn nachfolgend von einem Stapel gesprochen wird, sind Briefstapel, Postkartenstapel und andere Poststückstapel gemeint, welche sich vereinzeln lassen, aber auch ein anderes gestapeltes flaches Gut soll nicht ausgeschlossen werden.

In Amerika gilt es die Standardformate "Letter" zu verarbeiten, wie Letter 8 1/2 inch x 11 inch (21,59 cm x 27,94 cm), Letter 8 1/2 inch x 14 inch (21,59 cm x 35,56 cm), Letter 14 7/8 inch x 11,69 inch (37,8 cm x 29,69 cm) aber auch Kuverte wie #10 envelope 8 1/3 inch x 4 1/7 inch (24,1 cm x 10,5 cm).

Insbesondere in Deutschland sind die Formate B4 (25,0 cm x 35,3 cm), B5 (17,6 cm x 25,0 cm), B6 (12,5 cm x 17,6 cm) und C4 (22,9 cm x 32,4 cm), C5 (16,2 cm x 22,9 cm), C6 (11,4 cm x 16,2 cm) üblich. Die Größen der deutschen Papierformate sind bereits im Jahr 1922 vom Deutschen Institut für Normung (DIN) in der DIN-Norm DIN 476 festgelegt worden. Briefumschläge gibt es in verschiedenen Standardgrößen, definiert in ISO 269 und DIN 678 weitgehend anhand bestehender Papierformate. Die übliche Handelsbezeichnung (DIN lang plus) bzw. (C6 lang) für C6/5 (11,4 cm x 22,9 cm) entspricht nicht der Norm, wird aber überwiegend verwendet.

In dem deutschen Gebrauchsmuster DE 20 2015 102 333 U1 (G3288-DE) wurde schon ein Gutverarbeitungsgerät zum Anlegen und Vereinzeln von flachen Gut beschrieben. Das Gutverarbeitungsgerät kann kompakt oder auch modular aufgebaut sein. Auf ein Anlegemodul folgt im Transportweg ein Vereinzelungsmodul usw. Eine Steuereinheit des Vereinzelungsmoduls hat eine Schnittstelle, die mit einer Schnittstelle einer Steuereinheit des Anlegemoduls gekoppelt ist. Es wurde auch schon vorgeschlagen, die Steuereinheit des Anlegemoduls einzusparen und dessen Steuerung durch die Steuereinheit des Vereinzelungsmoduls mit zu übernehmen.

In dem deutschen Gebrauchsmuster DE 20 2016 106 124 U1 (G3292-DE) wurde bereits eine Vereinzelungsstation beschrieben, der eine Anlegestation vorgeschaltet ist.

In dem deutschen Gebrauchsmuster DE 20 2016 102 202 U1 (G3289-DE) wurde auch eine Anlegestation beschrieben, wobei das Anlegedeck eine Öffnung für ein Sendemittel eines Lichtsensors aufweist, wobei die Öffnung nahe der Ausrichtwand der Anlegestation angeordnet ist. Die Anlegestation weist einen Motor auf, die der Transportelemente der Anlegestation antreibt.

In dem deutschen Gebrauchsmuster DE 20 2016 106 125 U1 (G3293-DE) wurde auch bereits eine dynamische Waage für auf der Seite liegend transportierte flache Güter beschrieben, wobei die flachen Güter eine Anlegestation, eine Vereinzelungsstation eine dynamische Waage und eine Frankiermaschine aufeinander folgend durchlaufen.

In dem deutschen Gebrauchsmuster DE 20 2012 011 877 U1 (G3279-DE) wurde bereits eine Zuführstation beschrieben, deren Steuereinheit eine Längenmessung unter Beteiligung von einem dritten Sensor S3 der Zuführstation durchführt, der die Vorderkante und die Hinterkante eines transportierten flachen Guts während des Transport detektiert, wobei die Encodertaktimpulse gezahlt und ausgewertet werden, indem eine Differenz zwischen dem hohen und niedrigen Zählwert gebildet wird. Dabei tritt jedoch ein sogenannter "Schlupf" auf, da mit Hilfe von Encodersignalen nur die Bewegung der betreffenden Rolle direkt gemessen werden kann, nicht aber die Bewegung des flachen Guts selbst. Der Vereinzelungsvorgang wird, bei einer zu kleinen Lücke zwischen den aufeinanderfolgenden Poststücken gestoppt, um die Lücke zu vergrößern.

Aus dem deutschen Gebrauchsmuster DE 20 2012 011 876 U1 geht eine automatische Zuführstation hervor, deren Steuereinheit zur Wegsteuerung ausgebildet ist und es ermöglicht, eine zu große Lücke zwischen den Poststücken zu verkleinern.

In dem europäischen Patent EP 1377897 B2 wird eine Briefflusssteuerung mitgeteilt, dabei handelt es sich um ein modulares System, in welchem jeder Modul einen Sensor und einen Speicher umfasst. Das System weist eine zeitliche Steuerung auf, welche eine Durchführung einer Berechnung für die Zeit oder das Zeitfenster, in welchem ein Umschlag ankommen sollte, ermöglicht. Die Längen von Umschlägen können beispielsweise dadurch detektiert werden, dass die Vorder- und Hinterkante im ersten Modul erfasst werden. Auch hier tritt wieder das vorgenannte Schlupf-Problem auf.

Im Frankiersystem Centor mit dynamischer Waage wird die Brieflänge allein durch die automatische Zuführstation ermittelt. Es gibt dafür einen separaten Encoder und eine separate Lichtschranke. Sobald ein Brief diese Lichtschranke mit seiner Vorderkante schließt, werden die Encodersignale gezählt. Das Zählen wird beendet, sobald die Hinterkante des Poststückes die Lichtschranke wieder freigibt. Aus der in Millimeter umgerechneten Gesamtzahl der Encodersignale ergibt sich die Länge des Poststückes. Da eine dezidierte Rolle mit Encoder verwendet wird, die auf dem Poststück läuft, ohne ihn anzutreiben, können Messfehler durch "Schlupf" minimiert werden. Aber auch hier kann es zu Messfehlern kommen, beispielsweise beim Aufsetzen der Rolle auf das Poststück und beim Absetzen der Rolle vom Poststück. Gerade bei dicken kantigen Poststücken treten zum Teil starke Stöße auf, sowohl beim Einlaufen der Vorderkante des Poststückes in die Rolle als auch beim Auslaufen des Poststückes aus der Rolle.

Es ist Aufgabe der Erfindung, eine sichere Längenmessung für eine automatische Zuführstation mit einer Wegsteuerung zu entwickeln, die sicherstellt, dass ein flaches Gut nahezu ohne Schlupf transportiert wird, wobei die Längenmessung auf dem Zählen von Encoderimpulsen des Transportantriebs der automatischen Zuführstation basiert.

Auch sollte eine kostengünstige und leistungsfähige Längenmessung entwickelt werden, mit der bei allen üblichen Briefformaten von der Postkarte bis zum B4 Format, die Brieflänge ausreichend genau gemessen werden kann, um anhand der gemessenen Brieflänge eine korrekte Portoberechnung durchführen zu können. Weiterhin muss die Messung rechtzeitig vor dem Druckbeginn in der Frankiermaschine abgeschlossen sein, damit ausreichend Zeit zur format- und gewichtsabhängigen Portoberechnung vor dem Druckbeginn zur Verfügung steht.

Die Aufgabe wird mit den Merkmalen eines Verfahrens zur Längenmessung eines flachen Gutes in einem Gutverarbeitungssystem nach dem Patentanspruch 1 und mit einer Anordnung zur Durchführung des Verfahrens in einem Gutverarbeitungssystem nach dem Patentanspruch 6 gelöst.

Das Gutverarbeitungssystem weist mindestens eine erste Station und eine zweite Station auf, wobei die zweite Station stromabwärts der ersten Station in Transportrichtung des flachen Guts angeordnet ist. Jede der Stationen umfasst mindestens einen Motor, einen Encoder und einen Sensor, welche mit einer Steuereinheit verbunden sind. Die Steuereinheit ist programmiert, eine Wegsteuerung durchzuführen.

Das Verfahren zur Längenmessung eines flachen Gutes in einem Gutverarbeitungssystem, umfasst die folgenden Schritte.
- Vorsehen eines Encoderimpulszählers in der Steuereinheit der ersten Station und Zählen der Encoderimpulse des Encoders der ersten Station mittels des Encoderimpulszählers,
- Ermitteln eines Ereignisses mittels eines ersten Sensors der zweiten Station und Speichern eines zugehörigen Zahlenwertes Z1 des Encoderimpulszählers in einem ersten Register der Steuereinheit der ersten Station,
- Speichern eines Zahlenwertes Z2 für einen Abstand d zwischen zwei Sensoren in einem zweiten Register der Steuereinheit der ersten Station, wobei die Sensoren zu unterschiedlichen Stationen gehören,
- Ermitteln eines Ereignisses mittels des Sensors der ersten Station und Speichern eines zugehörigen Zahlenwertes Z3 des Encoderimpulszählers in einem dritten Register der Steuereinheit der ersten Station,
- Summieren des Zahlenwertes Z2 und der Differenz Δ = Z3 - Z1 der Zählerstände Z3 und Z1 mittels der Steuereinheit der ersten Station, sobald beide Ereignisse vorliegen.

Eine Anordnung zur Durchführung des Verfahrens in einem Gutverarbeitungssystem, ist dadurch gekennzeichnet, dass
- ein Sensor der ersten Station zum Ermitteln eines Ereignisses und ein Encoderimpulszähler in der Steuereinheit der ersten Station vorgesehen sind, wobei der Encoderimpulszähler zum Zählen der Encoderimpulse des Encoders der ersten Station ausgebildet ist und dem Ereignis ein zugehöriger Zahlenwert Z3 des Encoderimpulszählers entspricht,
- ein erster Sensor der zweiten Station zum Ermitteln eines Ereignisses vorgesehen ist und dass ein erstes Register der Steuereinheit der ersten Station zum Speichern eines zugehörigen Zahlenwertes Z1 des Encoderimpulszählers und ein zweites Register der Steuereinheit der ersten Station zum Speichern eines Zahlenwertes Z2 für einen Abstand d zwischen zwei Sensoren vorgesehen ist, wobei die Sensoren zu unterschiedlichen Stationen gehören,
- ein drittes Register der Steuereinheit der ersten Station zum Speichern des zu dem vom Sensor der ersten Station detektierten Ereignis zugehörig ermittelten Zahlenwert Z3 des Encoderimpulszählers vorgesehen ist sowie
- die Steuereinheit der ersten Station zum Summieren des Zahlenwertes Z2 und der Differenz Δ = Z3 - Z1 der Zählerstände Z3 und Z1 programmiert ist, wobei die Summe gebildet wird, sobald beide Ereignisse vorliegen.

Es ist vorgesehen, dass das Ereignis, das vom Sensor der ersten Station ermittelt wird, die Detektion der Hinterkante des flachen Gutes betrifft und dass das Ereignis, das vom Sensor der zweiten Station ermittelt wird, die Detektion der Vorderkante des flachen Gutes betrifft.

Ausgehend von der automatischen Zuführstation der Frankiermaschine PostBase, welche zwei Antriebe besitzt, die jeweils mit einem Encoder versehen sind, wurde untersucht, ob und welche zusätzliche Maßnahmen die Mängel bei der Längenmessung von Poststücken beseitigen können. Für die automatische Zuführstation ist vorgesehen, dass eine Vereinzelungsrolle von einem ersten Motor und dass zwei Transportrollen im Transportweg nacheinander angeordnet sind und von einem zweiten Motor der automatischen Zuführstation angetrieben werden. Als Sensoren werden Lichtschranken eingesetzt, wobei eine Lichtschranke der ersten Station das Ereignis detektiert, wenn die Hinterkante des flachen Gutes die Lichtschranke freigibt und dass eine Lichtschranke der zweiten Station das Ereignis detektiert, wenn die Vorderkante des flachen Gutes die Lichtschranke erreicht.

Die Untersuchung ergab, dass der Encoder des ersten Motors zum Antrieb der Vereinzelungsrolle nicht zur Längenermittlung verwendet werden kann, weil es - systembedingt - zu viele Umstände gibt, unter denen sich die Vereinzelungsrolle zwar bewegt, das getriebene Poststück aber nicht in gleichem Maße ohne "Schlupf" bewegt werden kann. Auch kann man diesen Schlupf-Effekt nicht exakt bestimmen und herausrechnen.

Es wurde empirisch gefunden, dass der Encoder des zweiten Motors zum Antrieb der Transportrollen zur Längenmessung verwendet werden kann, allerdings erst dann (und solange) ein flaches Gut auch von der in Transportrichtung angeordneten zweiten Transportrolle oder -walze gegriffen wird, nur dann ist sichergestellt, dass das flache Gut nahezu ohne Schlupf transportiert wird.

Eine vorteilhafte Variante der dynamischen Waage weist Mittel zur Bestimmung der drei Dimensionen des flachen Guts auf, wobei die Mittel zur Längenmessung nur teilweise innerhalb der dynamischen Waage angeordnet sind.

Die dynamische Waage hat ebenfalls einen Sensor bzw. Lichtschranke, was zu dem Gedanken beitrug, dass Mittel zur Bestimmung der Länge des flachen Guts einerseits teilweise innerhalb der dynamischen Waage angeordnet sind.

Andererseits sind weitere Mittel zur Bestimmung der Länge des flachen Guts in der stromaufwärts der dynamischen Waage angeordneten automatischen Zuführstation vorgesehen, wie beispielsweise der Encoderimpulszählers der Steuereinheit und das in einem Programmspeicher gespeicherte Programm sowie gespeicherte Daten, wie mindestens die Daten, die einen Abstand d zwischen den Lichtschranken zweier unmittelbar benachbarter Stationen wiederspiegeln.

Im Unterschied gegenüber der Briefflusssteuerung nach dem europäischen Patent EP 1377897 B2 nutzt das Frankiersystem PostBase der Anmelderin keine zeitliche Steuerung, sondern eine Wegsteuerung. Jeder Modul hat ebenfalls mindestens einen Sensor. Es ist vorgesehen, dass ein Abstand zwischen zwei Sensoren bzw. Lichtschranken als Zahlenwert oder als eine Anzahl von Encoderimpulsen in einem Speicher der Steuereinheit der Vereinzelungsstation gespeichert ist, wobei die Sensoren zu unterschiedlichen Modulen gehören. Die Summe aus den Encoderimpulsen für die Länge des Abstandes zwischen zwei Sensoren und aus der Differenz der Zählerstände des Encoders des Transportantriebes bei den genannten Sensor- bzw. Lichtschrankenereignissen ergibt eine Anzahl von Encoderimpulsen, die der Länge des flachen Guts entspricht.

Mit einer Funktion **λ** oder k kann eine Anzahl von Encoderimpulsen in eine Länge mit einer vorbestimmter Maßeinheit für ein flaches Gut umrechnet werden, wobei dessen Länge dann beispielsweise in mm oder in cm angegeben werden kann.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Fig. 1, Draufsicht auf eine vereinfachte schematische Anordnung von Stationen eines bekannten Gutverarbeitungssystems,
Fig. 2, schematische Anordnung von Baugruppen der automatischen Zuführung und der dynamischen Waage zur vereinfachten Darstellung des Prinzips der Längenmessung,
Fig. 3, perspektivische Darstellung des Frankiersystems PostBase100, von vorn, oben und links,
Fig. 4, Verfahrensschritt zum Vorbereiten des Frankiersystems,
Fig. 5, Routine der Steuereinheit der automatischen Zuführung,
Fig. 6, Routine der Steuereinheit der dynamischen Waage.

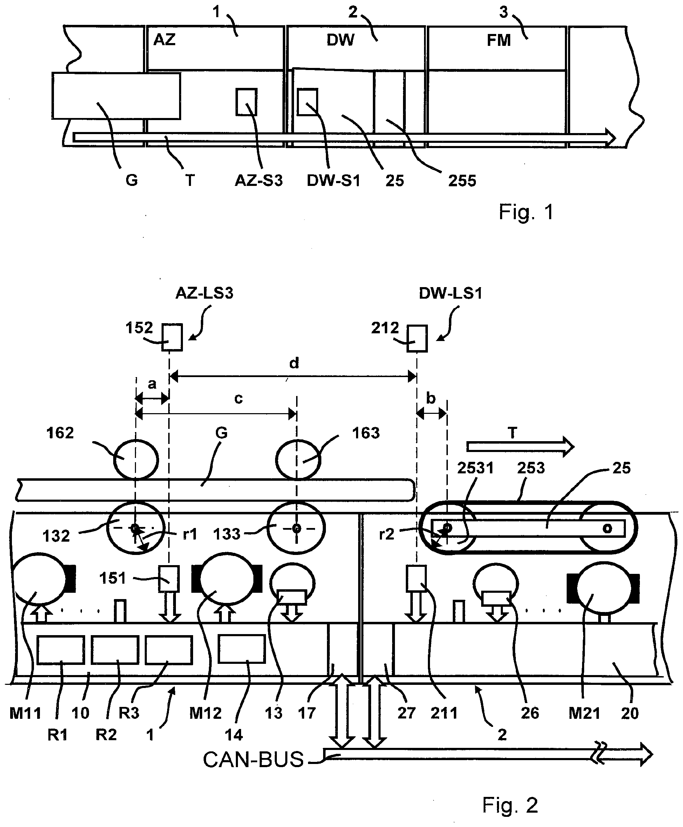

Die Figur 1 zeigt eine Draufsicht auf eine vereinfachte schematische Anordnung von Stationen eines bekannten Gutverarbeitungssystems. Ein flaches Gut G wird entlang eines Transportpfades T transportiert und durchläuft mehrere Stationen des Gutverarbeitungssystems. Bei mehreren flachen Gütern, die nacheinander transportiert werden, spricht man auch von einem Gutstrom. Eine erste Station 1 ist einer zweiten Station 2, der dynamischen Waage (DW), gutstromaufwärts vorangestellt. Ein Wiegeteller 25 der dynamischen Waage hat eine trapezförmige Grundfläche mit zwei nicht parallelen Seitenschenkeln. Eine an dem Wiegeteller 25 montierte Abdeckung 255 ist für einen - nicht gezeigten - Breitensensors vorgesehen. Eine dritte Station 3 ist gutstromabwärts, also im Transportpfad T nach der dynamischen Waage (DW) angeordnet. Beispielsweise enthält in einem Frankiersystem die erste Station 1 eine Vereinzelungsstation zur automatischen Zuführung vereinzelter flacher Güter, die Station wird deshalb nachfolgend auch automatische Zuführstation genannt. Die dritte Station 3 ist eine Frankiermaschine (FM).

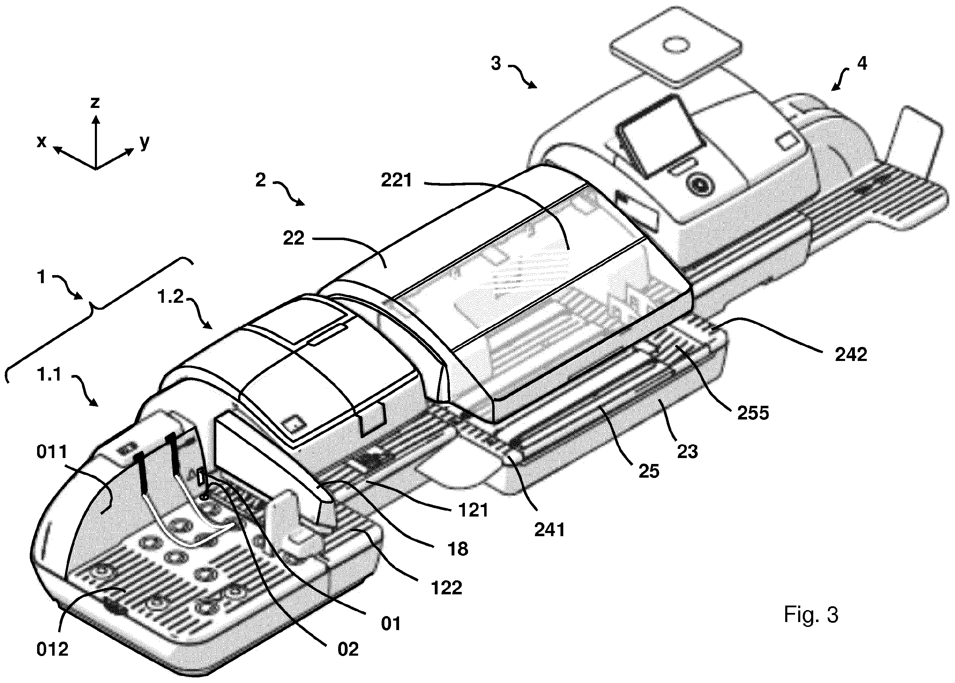

Die Figur 2 zeigt eine schematische Anordnung von Baugruppen der automatischen Zuführstation und der dynamischen Waage zur vereinfachten Darstellung des Prinzips der Längenmessung. Eine Steuereinheit 10 der automatischen Zuführstation (Station 1) weist eine Anzahl an Registern R1, R2, R3, einen Encoderimpulszähler 14 und eine Schnittstelle 17 auf. Die Steuereinheit 10 ist mindestens zum Ansteuern mit einem ersten Motor M11 zum Antrieb einer - nicht gezeigten - Vereinzelungsrolle, mit einem zweiten Motor M12 zum Antrieb einer ersten Transportrolle 132 und einer zweiten Transportrolle 133 sowie zum Signalempfang, mit einem - nicht gezeigten - Encoder ersten Motors M11, mit einem Encoder 13 des zweiten Motors M12 und mit einer Anzahl an - nicht gezeigten -Sensoren S1, S2, ... Sn verbunden. Ein dritter Sensor S3 der automatischen Zuführstation ist als Lichtschranke AZ-LS3 ausgebildet und besteht aus einem Sender 151 und einem Empfänger 152. Der Lichtstahl verläuft in z-Richtung (siehe Fig. 3), also orthogonal zur Transportrichtung y und zur Richtung x der Achse der ersten Transportrolle 132, in einem Abstand a von der Achse der ersten Transportrolle 132 sowie stromabwärts nahe an einer ersten Andruckwalze 162 vorbei. Der Abstand a ist marginal größer als der Radius r1 der ersten Transportrolle 132 und beträgt beispielsweise 15,40 mm. Eine nichtangetriebenen ersten Andruckwalze 162 liegt in z-Richtung der ersten Transportrolle 132 und eine nichtangetriebenen zweiten Andruckwalze 163 liegt in z-Richtung der zweiten Transportrolle 133 gegenüber, wobei beide Andruckwalzen ein Bestandteil eines - nicht gezeigten - Andruckkastens, der ein Bestandteil einer Vereinzelungsstation ist, deren Gewicht von oben auf das flache Gut G drückt.

Aus dem deutschen Gebrauchsmuster DE 20 2016 106 124 U1 gehen weitere Detail der Vereinzelungsstation hervor. Das flache Gut G wird zwischen der angetriebenen ersten Transportrolle 132 und der nichtangetriebenen ersten Andruckwalze 162 eingeklemmt weiter in Transportrichtung T zu einer angetriebenen zweiten Transportrolle 133 und einer nichtangetriebenen zweiten Andruckwalze 163 transportiert. Die Achsen der beiden angetriebenen Transportrolle 132 und 133 sind parallel zur x-Richtung und in einem Abstand voneinander angeordnet, der geringer ist, als die Länge des kleinsten Formates für flache Güter G (für Poststücke gilt: Lmin = 140 mm). Der Abstand der beiden Achsen beträgt für Poststücke vorzugsweise c = 135 mm.

Eine Schnittstelle 17 der ersten Station 1 ist über einen Controller Area Network (CAN) mit einer Schnittstelle 27 der zweiten Station 2 und mit Schnittstellen von weiteren - nicht gezeigten - Stationen verbunden. Das CAN ist ein serielles Bussystem. Der CAN-Bus verbindet mehrere gleichberechtigte Steuereinheiten der Stationen des Frankiermaschinensystems miteinander.

Vor einer Längenmessung sendet - in nicht gezeigter Weise - eine Steuereinheit der Frankiermaschine 3 (Fig. 1) Befehle zur Vorbereitung des Betriebes der einzelnen Stationen via CAN-Bus aus, also auch zu der Steuereinheit 10 der ersten Station 1 (automatische Zuführstation) und der Steuereinheit 20 der zweiten Station 2 (dynamische Waage).

Nach der Auswertung der Längenmessung sendet die Steuereinheit 10 der automatischen Zuführstation den Zahlenwert der ermittelten Länge eines flachen Guts an die - nicht gezeigte - Steuereinheit der Frankiermaschine 3 (Fig. 1) via CAN-Bus.

Die Steuereinheit 20 der dynamischen Waage ist mit der Schnittstelle 27, mit mindestens einem ersten Motor M21 der dynamischen Waage zu dessen Ansteuerung zum Antrieb mindestens eines Transportriemens 253 sowie zum Signalempfang mit einem Encoder 26 ersten Motors M21, und mit einer - nicht gezeigten - Anzahl an Sensoren verbunden. Ein erster Sensor der dynamischen Waage ist ebenfalls als Lichtschranke DW-LS1 ausgebildet und besteht aus einem Sender 211 und einem Empfänger 212. Der Lichtstrahl der Lichtschranke DW-LS1 verläuft stromaufwärts in einem Abstand b von der Achse einer ersten Umlenkrolle 2531 des mindestens einen Transportriemens 253. Der Lichtstahl verläuft in z-Richtung (Fig. 3), also orthogonal zur Transportrichtung y und zur Richtung x der Achse. Der Abstand b ist marginal größer als der Radius r2 der ersten Umlenkrolle.

Die beiden Lichtstrahlen der Lichtschranke AZ-LS3 und der Lichtschranke DW-LS1 verlaufen vorzugsweise parallel zueinander. Zwischen den beiden Lichtstrahlen der Lichtschranke AZ-LS3 und der Lichtschranke DW-LS1 existiert eine Distanz d, welche größer ist als die Länge des kleinsten Formats Lmin und kleiner ist als die Länge Lmedian eines mittleren Formats des flachen Guts. Ein in Deutschland übliches Standardformat C6/5 für einen Briefumschlag mit einem mittleren Format trägt die Handelsbezeichnung "C6 lang", "DL+" oder "DLplus" und hat die Länge Lmedian = 229 mm. Die Distanz d liegt in einem Bereich von 140 mm bis 220 mm und beträgt vorzugsweise 193 mm. Die Lichtschranken können vorteilhaft als Durchlichtschranken ausgebildet sein.

Die Achsen der Umlenkrollen der Transportriemen sind auf einem Wiegeteller 25 montiert, was zusammen mit weiteren Details dem deutschen Gebrauchsmuster DE 20 2016 106 125 U1 entnommen werden kann.

Die Figur 3 zeigt eine perspektivische Darstellung des Frankiersystems Post-Basel 00, von vorn, oben und links. Die erste Station 1 ist eine automatische Zuführstation in modularer Bauweise. Deren erstes Modul ist eine Anlegestation 1.1. Die Anlegestation 1.1 dient zum Anlegen von einzelnen oder gestapelten Poststücken an die Vereinzelungsstation 1.2, welche den Stapel vereinzelt. Die vereinzelten Poststücke werden über eine dynamische Waage einer Frankiermaschine 3 zugeführt und dann in einer Ablagestation 4 abgelegt.

Die Anlegestation 1.1 weist einen - nicht gezeigten - Sensor zum Nachweis von mindestens einem angelegten Poststück auf. Der Sensor AN-SO ist vorzugsweise als Lichtschranke AN-SLO realisiert. Für den Empfänger der Lichtschranke ist eine Öffnung 01 in einer Ausrichtwand 011 und für den Sender der Lichtschranke ist eine Öffnung 02 in einem Anlegedeck 012 vorgesehen. Weitere Details gehen aus dem deutschen Gebrauchsmuster DE 20 2016 102 202 U1 hervor.

Das zweite Modul der ersten Station 1 ist eine Vereinzelungsstation 1.2 mit einem Ausleger 18 sowie mit den Zuführdecks 121 und 122. Der Ausleger 18 hält diejenigen Poststücke eines Stapels zurück, welcher erst später vereinzelt werden sollen. Die weiteren Details sind in dem deutschen Gebrauchsmuster DE 20 2016 106 124 U1 offenbart.

Die zweite Station 2 ist eine dynamische Waage mit den Decks 241 und 242 sowie mit einer halbtransparenten aufklappbaren Haube 221 des Gehäuseoberteils 22. Im Gehäuseunterteil 23 sind in den Abschnitten zwischen den Decks 241 und 242 der Wiegeteller 25 mit der anmontierten Abdeckung 255 angeordnet. Vorzugsweise ist sind Mittel zur Bestimmung von zwei der drei Dimensionen des flachen Guts vollständig ein Bestandteil der dynamischen Waage und nur ein Mittel zur Bestimmung von einer der drei Dimensionen des flachen Guts ist teilweise in der dynamischen Waage angeordnet. Zu dem letztgenannten Mittel gehört der erste Sensor der dynamischen Waage, welcher als Lichtschranke DW-LS1 ausgebildet ist.

Die dritte Station 3 ist eine Frankiermaschine. Nach den drei Stationen 1, 2 und 3 ist als vierte Station 4 eine Ablage für Poststücke vorgesehen. Die x-Richtung eines kartesischen Koordinatensystems liegt quer zur y-Richtung, wobei die Transportrichtung mit der y-Richtung übereinstimmt. Die z-Richtung liegt othogonal zur x-/y-Ebene.

Die Achsen der beiden angetriebenen Transportrolle 132 und 133 sind parallel zur x-Richtung und in einem Abstand voneinander angeordnet, der geringer ist, als die Länge des kleinsten Formates (für Poststücke Lmin = 140 mm).

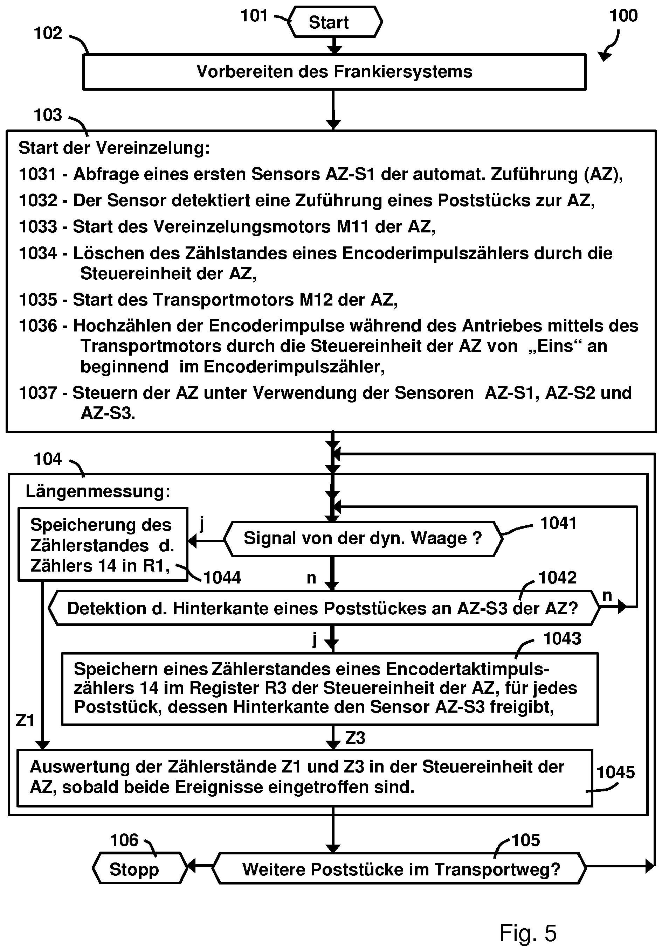

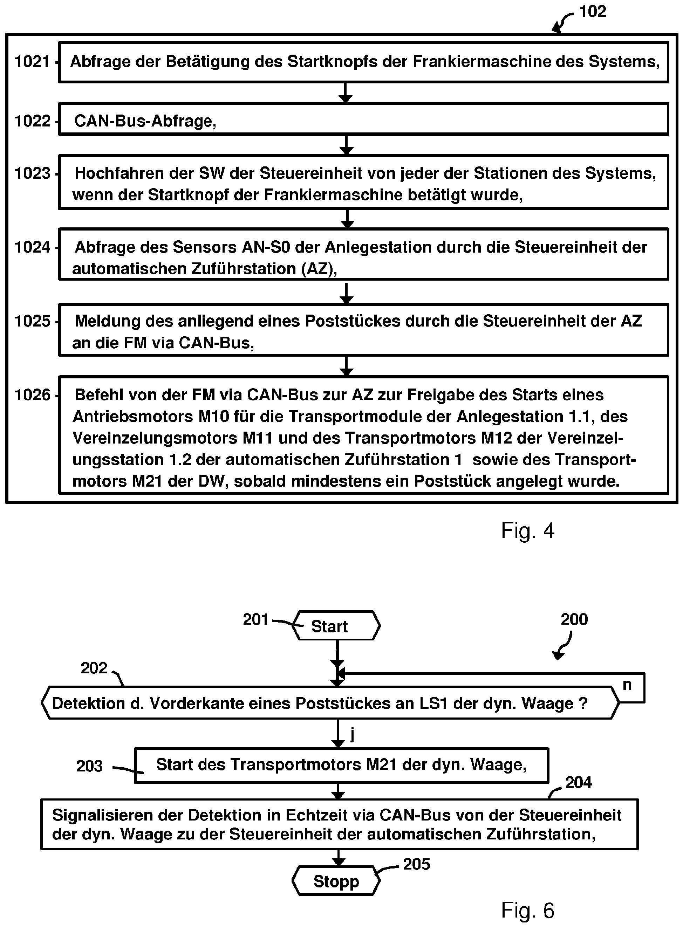

Die Figur 5 zeigt eine Routine 100, die in der Steuereinheit der automatischen Zuführung abläuft und einen Schritt 102 zum Vorbereiten des Frankiersystems einschließt, welcher anhand der Figur 4 genauer beschrieben wird.

Die Figur 4 zeigt einen Schritt 102 zum Vorbereiten des Frankiersystems, umfassend die folgenden Sub-Schritte:
1021 - Abfrage der Betätigung des Startknopfs der Frankiermaschine (Station 3) des Systems,
1022 - CAN-Bus-Abfrage und
1023 - Hochfahren der SW der Steuereinheit von jeder der Stationen des Systems, wenn der Startknopf betätigt wurde,
1024 - Abfrage eines Sensors SO/ der Lichtschranke AN-SLO der Anlegestation durch die Steuereinheit der automatischen Zuführstation,
1025 - Meldung des anliegend eines Poststückes durch die Steuereinheit der automatischen Zuführstation an die Frankiermaschine via CAN-Bus,
1026 - Befehl von der Frankiermaschine via CAN-Bus zur automatischen Zuführstation dient zur Freigabe des Starts eines Antriebsmotors M10 für die Transportmodule der Anlegestation 1.1, des Vereinzelungsmotors M11 und des Transportmotors M12 der Vereinzelungsstation 1.2 der automatischen Zuführstation 1 sowie des Transportmotors M21 der dynamischen Waage, sobald mindestens ein Poststück angelegt wurde.

Die Routine 100 der Figur 5 beginnt mit dem Start 101 gefolgt von dem Schritt 102 zum Vorbereiten des Frankiersystems und mit einem Schritt 103 zum Start der Vereinzelung. Der Schritt 103 umfasst die folgenden Subschritte:
1031 - Abfrage eines ersten Sensors AZ-S1 bzw. Lichtschranke AZ-SL1 der automatischen Zuführung (AZ),
1032 - Der Sensor AZ-S1 detektiert eine Zuführung eines Poststücks zur AZ,
1033 - Start des Vereinzelungsmotors M11 der AZ,
1034 - Löschen des Zählstandes eines Encoderimpulszählers durch die Steuereinheit der AZ,
1035 - Start des Transportmotors M12 der AZ,
1036 - Hochzählen der Encoderimpulse während des Antriebes mittels des Transportmotors durch die Steuereinheit der AZ von "Eins" an beginnend im Encoderimpulszähler,
1037 - Steuern der AZ unter Verwendung der Sensoren AZ-S1, AZ-S2 und AZ-S3 bzw. Lichtschranken AZ-SL1, AZ-SL2 und AZ-SL3.

Nach dem Schritt 103 folgt ein Schritt 104 zur Durchführung der Längenmessung. In einem ersten Abfrageschritt 1041 wird abgefragt, ob ein Signal von der dynamischen Waage vorliegt. Zu einem Subschritt 1044 wird verzweigt, wenn ein Signal von der dynamischen Waage vorliegt. Die dynamische Waage signalisiert für jedes Poststück, das mit der Vorderkante die Lichtschranke DW-LS1 bedeckt, dieses Ereignis per CANopen in Echtzeit. Bei einem Signal von der dynamischen Waage wird in der automatischen Zuführstation ein Zählstand Z1 des Encodertaktimpulszählers 14 ausgelesen und im Register R1 gespeichert.

Anderenfalls, wenn ein Signal von der dynamischen Waage vorliegt, wird ein zweiter Abfrageschritt 1042 erreicht, in welchem abgefragt wird, ob eine Detektion der Hinterkante eines Poststückes an der Lichtschranke AZ-SL3 durch die Steuereinheit der automatischen Zuführstation erfolgt ist. Vom zweiten Abfrageschritt 1042 wird zum Beginn des Schritts 104 zurückverzweigt, falls das abgefragte Ereignis noch nicht eingetreten ist. Anderenfalls, falls das abgefragte Ereignis schon eingetreten ist, wird zu einem Subschritt 1043 verzweigt. Im Subschritt 1043 erfolgt ein Speichern eines Zählerstandes eines Encodertaktimpulszählers für jedes Poststück, dessen Hinterkante die Lichtschranke AZ-SL3 freigibt, im Registers R3 der Steuereinheit der automatischen Zuführstation. Ein Zählstand Z3 des Encodertaktimpulszählers 14 liegt somit im Registers R3 vor, wenn das Ereignis eingetroffen ist. Im Subschritt 1045 erfolgt eine Auswertung der gespeicherten Zählerstände des Encodertaktimpulszählers 14 durch die Steuereinheit der automatischen Zuführstation, wenn beide Ereignisse eingetroffen sind.

Nach dem Schritt 104 führt die Routine einen Abfrageschritt 105 durch, mit der Abfrage, ob weitere Poststücke im Transportweg vorhanden sind. Zum Beginn des Schritts 104 wird zurückverzweigt, wenn das zutreffend ist und mindestens ein weiteres Poststück im Transportweg vorhanden ist. Anderenfalls wird zum Schritt 106 zum Stopp verzweigt, wenn kein weiteres Poststück im Transportweg vorhanden ist.

Der Subschritt 1044 umfasst die Speicherung des Zählstandes Z1 und der Subschritt 1043 umfasst die Speicherung des Zählstandes Z3 des Zählers 14 in zwei Registern R1 und R3. In einem weiteren Register R2 ist ein fester Zahlenwert für den konstanten Abstand D gespeichert. Die Figur 5 zeigt den Subschritt 1045 zur Auswertung, die erst dann erfolgt, wenn beide Ereignisse eingetroffen sind.

Für die Längenermittlung gibt es nun zwei Szenarios:
I. Das Poststück ist länger oder genauso lang wie der Abstand d zwischen AZ-LS3 und DW-LS1,
II. Das Poststück ist kürzer als der Abstand d zwischen AZ-LS3 und DW-LS1.

### Szenario I:

Die Vorderkante des Poststücks erreicht zuerst die Lichtschranke DW-LS1 in der dynamischen Waage. Der Encoderimpulszähler 14 zählt die Encoderimpulse weiter hoch. Der Zählerstand Z1 ist deshalb zum Zeitpunkt des Schließens der Lichtschranke DW-LS1 in der dynamischen Waage kleiner oder gleich dem Zählerstand Z3 zum Zeitpunkt des Öffnens der Lichtschranke AZ-LS3 in der automatischen Zuführstation.

Berechnungsvariante I.1: Die Distanz d ist als Zahlenwert in dem Register R2 gespeichert und entspricht dem Abstand in mm. Der Zahlenwert Z1 für die im Register R1 gespeicherte Anzahl der Encoderimpulse wird von dem anderen Zahlenwert Z3 für die im Register R3 gespeicherte Anzahl der Encoderimpulse subtrahiert und ergibt multipliziert mit einem beliebigen Umrechnungsfaktor δ eine Weglänge δ • Δ in der gewünschten Maßeinheit. Die Differenz Δ = Z3 - Z1 der Zahlenwerte Z3 und Z1 wird beispielsweise mittels einem Umrechnungsfaktor k in einen Zahlenwert für eine Weglänge in mm umgerechnet, die der Differenz Δ entspricht. Ein pro Encodertakt zurückgelegter Weg s in mm ist für das Poststück bekannt. Der Encoder liefert beispielsweise pro Millimeter Weg 8,97 Signale, also beträgt der zurückgelegte Weg pro Encodertakt s = 1/8,97 mm = 0,1115 mm. Der Umrechnungsfaktor beträgt somit k = 0,1115. Diese mit einer Maßeinheit in mm errechnete Weglänge wird zum Zahlenwert (Maßeinheit ebenfalls in mm) für den Abstand d zwischen AZ-LS3 und DW-LS1 addiert und ergibt die Länge d + k • Δ des Poststückes mit der Maßeinheit in mm.

Berechnungsvariante I.2: Die Distanz d ist als Zahlenwert Z2 in dem Register R2 gespeichert und entspricht einer Anzahl an Encodertaktipulsen. Die Differenz Δ = Z3 - Z1 der Zahlenwerte Z3 und Z1 wird zum Zahlenwert Z2 für die Anzahl an Encodertaktipulsen addiert, wobei die Anzahl an Encodertaktipulsen dem Abstand d zwischen AZ-LS3 und DW-LS1 entsprechen. Die Summe Z2 + Δ der Zahlenwerte Z2, Z3 und Z1 wird mittels einem Umrechnungsfaktor k in einen Zahlenwert für eine Weglänge k • (Z2 + Δ) umgerechnet, die der Länge des Poststückes in mm entspricht.

Berechnungsvariante I.3: Alternativ wird die Summe Z2 + Δ der Zahlenwerte Z2, Z3 und Z1 mittels einem Umrechnungsfaktor λ in einen Zahlenwert für eine Weglänge λ • (Z2 + Δ) umgerechnet werden, die der Länge des Poststückes in einer anderen Maßeinheit beispielsweise cm entspricht.

### Szenario II:

Die Hinterkante des Poststücks erreicht zuerst die Lichtschranke AZ-LS3 in der automatischen Zuführstation. Der Encoderimpulszähler 14 zählt die Encoderimpulse weiter hoch. Deshalb ist der Zählerstand Z1 zum Zeitpunkt des Schließens der Lichtschranke DW-LS1 in der dynamischen Waage größer, als der Zählerstand Z3 zum Zeitpunkt des Öffnens der Lichtschranke AZ-LS3 in der automatischen Zuführstation.

Berechnungsvariante II.1: Die Distanz d ist als Zahlenwert in dem Register R2 gespeichert und entspricht dem Abstand in mm. Die Differenz Δ = Z1 - Z3 der Zahlenwerte wird mittels einem Umrechnungsfaktor k in einen Zahlenwert für eine Weglänge mit der Maßeinheit in mm umgerechnet, die der Differenz entspricht. Der Weg s pro Encodertakt ist bekannt. Die in eine Weglänge k · Δ umgerechnete Differenz Δ = Z1 - Z3 der Zahlenwerte Z3 und Z1 wird vom Abstand d zwischen AZ-LS3 und DW-LS1 subtrahiert und ergibt die Länge des Poststückes mit der Maßeinheit in mm. Da die Gleichung L = d - k(Z1 - Z3) = d + k(Z3 - Z1) gilt, wird folglich der mit k multiplizierte Zahlenwert für Differenz Δ = (Z3 - Z1) wieder eine Weglänge mit der gewünschten Maßeinheit ergeben, welche addiert zum Zahlenwert für den Abstand d zwischen AZ-LS3 und DW-LS1, die Länge des Poststückes mit der Maßeinheit in mm ergibt.

Weitere alternative Berechnungsvarianten II.2 und II.3 sind ebenso möglich, wobei erst zum Schluß eine Umrechnung mittels eines Umrechnungsfaktors k oder λ oder δ in einen Zahlenwert erfolgt, der dem Abstand d in mm oder in cm oder in einer anderen Maßeinheit entspricht. Alternativ kann somit mit einem anderen Umrechnungsfaktor auch eine Umrechnung in Inch oder in eine andere Maßeinheit erfolgen.

Die Figur 6 zeigt eine Routine 200, die in der Steuereinheit der dynamischen Waage abläuft. Die Routine 200 beginnt mit dem Start 201 gefolgt von einem Abfrageschritt 202 zur Abfrage, ob eine Detektion der Vorderkante eines Poststückes an der Lichtschranke DW-LS1 der dynamischen Waage erfolgt ist. Ein Start des Transportmotors M21 der dynamischen Waage wird im Schritt 203 ausgelöst, wenn das der Fall ist. Anderenfalls wird zum Beginn des Schritts 202 zurückverzweigt. Auf den Schritt 203 folgt ein Schritt 204 zum Signalisieren der Detektion in Echtzeit via CAN-Bus von der Steuereinheit der dynamischen Waage zur Steuereinheit der automatischen Zuführstation, dann wird die Routine 200 im Schritt 205 gestoppt. Eine andere Routine, beispielsweise zur Ermittlung der Dimensionen, wie der Breite, Höhe und des Gewichts läuft die Steuereinheit der dynamischen Waage aber weiterhin ab. Die Routine 200 wird erneut gestartet, wenn ein weiteres flaches Gut aus einem Stapel durch die automatische Zuführstation vereinzelt und zur dynamischen Waage transportiert wird.

Die für ein Frankiersystem beschriebene Längenmessung eignet sich auch für andere gutverarbeitende Systeme. Solche Systeme müssen nicht unbedingt eine automatische Zuführstation als erste Station und eine dynamischen Waage als zweite Station aufweisen.

Als Sensoren werden im obigen Ausführungsbeispiel Lichtschranken eingesetzt, jedoch sollen alternative Sensoren, wie taktile Sensoren usw. nicht ausgeschlossen werden. Bevorzugt sollen Sensoren eingesetzt werden, die an die Art und Weise einer Detektion des flachen Gutes angepasst sind.

Wenn der Begriff "Register" im vorliegenden Beispiel verwendet wird, soll aber dadurch nicht eine andere Ausführungsform ausgeschlossen werden. Das Verfahren würde auch funktionieren, wenn die Zahlenwerte irgendwo in einem flüchtigen Memory abspeichern würden und nicht in den Prozessorregistern.

Wenn im vorliegenden Beispiel eine bestimmte Ausführungsform, nämlich ein Frankiersystem mit einem ersten Sensor einer dynamischen Waage nach einer ersten Variante näher erläutert wurde, soll aber dadurch nicht eine andere Ausführungsform mit einer anderen zweiten Station nach einer weiteren Variante vom Schutzumfang ausgeschlossen werden, die vom gleichen Grundgedanken der Erfindung ausgehend eingesetzt werden kann und von den anliegenden Patentansprüchen umfasst wird.

## Patentansprüche

1. Verfahren zur Längenmessung eines flachen Gutes in einem Gutverarbeitungssystem, mit einer ersten Station (1) und einer zweiten Station (2), wobei die erste Station eine Zuführstation und die zweite Station eine dynamische Waage ist, wobei die zweite Station (2) stromabwärts der ersten Station in Transportrichtung des flachen Guts G angeordnet ist, wobei jede der Stationen (1, 2) mindestens einen Motor, einen Encoder (13, 26) und einen Sensor aufweisen, die mit einer Steuereinheit (10, 20) verbunden sind, wobei die Steuereinheit (10, 20) zur Durchführung einer Wegsteuerung programmiert ist, mit den Schritten: - Vorsehen eines Encoderimpulszählers (14) in der Steuereinheit (10) der ersten Station (1) und Zählen der Encoderimpulse des Encoders (13) der ersten Station mittels des Encoderimpulszählers (14) der Steuereinheit (10) der ersten Station,
- Ermitteln eines Ereignisses mittels eines ersten Sensors (DW-S1) der zweiten Station (2) und Speichern eines zugehörigen Zahlenwertes Z1 des Encoderimpulszählers (14) in einem ersten Register (R1) der Steuereinheit der ersten Station, wobei das Ereignis, welches vom Sensor (AZ-S3) der ersten Station ermittelt wird, die Detektion der Hinterkante des flachen Gutes G betrifft, - Speichern eines Zahlenwertes Z2 für einen Abstand d zwischen zwei Sensoren (AZ-S3, DW-S1) in einem zweiten Register (R2) der Steuereinheit (10) der ersten Station (1), wobei die Sensoren (AZ-S3 bzw. DW-S1) zu unterschiedlichen unmittelbar benachbarten Stationen (1 bzw. 2) gehören, - Ermitteln eines Ereignisses mittels des Sensors (AZ-S3) der ersten Station und Speichern eines zugehörigen Zahlenwertes Z3 des Encoderimpulszählers 14 in einem dritten Register (R3) der Steuereinheit (10) der ersten Station (1), wobei das Ereignis, welches vom Sensor (DW-S1) der zweiten Station ermittelt wird, die Detektion der Vorderkante des flachen Gutes G betrifft, - Summieren des Zahlenwertes Z2 und der Differenz Δ = Z3 - Z1 der Zählerstände Z3 und Z1 mittels der Steuereinheit (10) der ersten Station (1), sobald beide Ereignisse vorliegen.

2. Verfahren nach Anspruch 1, **gekennzeichnet dadurch, dass** der Abstand d zwischen zwei Sensoren (AZ-S3 und DW-S1) von benachbarten Stationen (1 und 2) größer ist, als die Länge des kleinsten Formats Lmin und kleiner ist, als die Länge Lmedian eines mittleren Formats des flachen Guts.

3. Verfahren nach den Ansprüchen 1 bis 2, **gekennzeichnet dadurch, dass** die Sensoren (AZ-S3, DW-S1) als Lichtschranken (AZ-LS3, DW-LS1) ausgebildet sind, dass eine Lichtschranke (AZ-LS3) der ersten Station (1) das Ereignis detektiert, wenn die Hinterkante des flachen Gutes G die Lichtschranke (AZ-LS3) freigibt und dass eine Lichtschranke (DW-LS1) der zweiten Station (2) das Ereignis detektiert, wenn die Vorderkante des flachen Gutes G die Lichtschranke (DW-LS1) erreicht.

4. Verfahren nach Anspruch 1, **gekennzeichnet dadurch, dass** der im zweiten Register (R2) gespeicherte Zahlenwert Z2 gleich einer Anzahl von Encoderimpulsen ist, wobei die Anzahl der Encoderimpulsen dem Abstand d zwischen zwei Sensoren bzw. Lichtschranken entspricht, die zu unterschiedlichen und unmittelbar benachbarten Stationen (1) und (2) gehören.

5. Verfahren nach Anspruch 1, **gekennzeichnet dadurch, dass** ein Umrechen einer Anzahl von Encoderimpulsen mittels einer Funktion λ oder k oder δ in eine Länge des flachen Guts in eine vorbestimmte Maßeinheit mittels der Steuereinheit (10) der ersten Station (1) erfolgt.

6. Anordnung zur Durchführung des Verfahrens in einem Gutverarbeitungssystem, das eine ersten Station (1) und eine zweite Station (2) aufweist, wobei die erste Station eine Zuführstation und die zweite Station eine dynamische Waage ist, wobei die zweite Station (2) stromabwärts der ersten Station in Transportrichtung des flachen Guts G angeordnet ist, wobei jede der Stationen (1, 2) mindestens einen Motor, einen Encoder (13, 26) und einen Sensor aufweist, die mit einer Steuereinheit (10, 20) verbunden sind, wobei die Steuereinheit (10, 20) zur Durchführung einer Wegsteuerung programmiert ist, wobei - ein Sensor (AZ-S3) der ersten Station (1) zum Ermitteln eines Ereignisses und ein Encoderimpulszähler (14) in der Steuereinheit (10) der ersten Station (1) vorgesehen sind, wobei der Encoderimpulszähler zum Zählen der Encoderimpulse des Encoders (13) der ersten Station (1) ausgebildet ist und dem Ereignis ein zugehöriger Zahlenwert Z3 des Encoderimpulszählers (14) entspricht,
- ein erster Sensor (DW-S1) der zweiten Station (2) zum Ermitteln eines Ereignisses und dass ein erstes Register (R1) der Steuereinheit der ersten Station (1) zum Speichern eines zugehörigen Zahlenwertes Z1 des Encoderimpulszählers (14) vorgesehen ist, wobei das Ereignis, welches vom Sensor (DW-S1) der zweiten Station ermittelt wird, die Detektion der Vorderkante des flachen Gutes G betrifft, - ein zweites Register (R2) der Steuereinheit (10) der ersten Station (1) zum Speichern eines Zahlenwertes Z2 für einen Abstand d zwischen zwei Sensoren (AZ-S3, DW-S1) vorgesehen ist, wobei die Sensoren (AZ-S3 bzw. DW-S1) zu unterschiedlichen unmittelbar benachbarten Stationen (1 bzw. 2) gehören,
- ein drittes Register (R3) der Steuereinheit (10) der ersten Station (1) zum Speichern des zu dem vom Sensor (AZ-S3) der ersten Station (1) detektierten Ereignis zugehörig ermittelten Zahlenwert Z3 des Encoderimpulszählers (14) vorgesehen ist, wobei das Ereignis, welches vom Sensor (AZ-S3) der ersten Station ermittelt wird, die Detektion der Hinterkante des flachen Gutes G betrifft, sowie - die Steuereinheit (10) der ersten Station (1) zum Summieren des Zahlenwertes Z2 und der Differenz Δ = Z3 - Z1 der Zählerstände Z3 und Z1 programmiert ist, wobei die Summe gebildet wird, sobald beide Ereignisse vorliegen.

7. Anordnung, nach Anspruch 6, **gekennzeichnet dadurch, dass** die Sensoren (AZ-S3, DW-S1) als Durchlichtschranken (AZ-LS3, DW-LS1) ausgebildet sind.

8. Anordnung, nach Anspruch 6, **gekennzeichnet dadurch, dass** zwei in der ersten Station nacheinander in Transportrichtung x angeordnete Transportrollen (132, 133) vorgesehen sind, wobei die zwei Transportrollen von einem zweiten Motor (M12) der ersten Station (1) angetrieben werden, dass die Achsen der beiden angetriebenen Transportrollen (132 und 133) parallel zur x-Richtung und in einem Abstand c voneinander liegen, wobei der Abstand c geringer ist, als die Länge Lmin des kleinsten Formates des flachen Guts G.

9. Anordnung, nach Anspruch 6, **gekennzeichnet dadurch, dass** Steuereinheiten der Stationen des Gutverarbeitungssystems über ein serielles Bussystem miteinander verbunden sind.

10. Anordnung, nach den Ansprüchen 6 und 9, **gekennzeichnet dadurch, dass** das serielle Bussystem ein CAN-Bus ist.

11. Anordnung, nach den Ansprüchen 6 und 10, **gekennzeichnet dadurch, dass** das Gutverarbeitungssystem ein Frankiermaschinensystem ist und die flachen Güter G Poststücke, wie kuvertierte Briefe oder Postkarten sind.

## Claims

1. Method for length measurement of a flat good in a goods processing system, having a first station (1) and a second station (2), wherein the first station is a supply station and the second station is a dynamic scale, wherein the second station (2) is arranged downstream of the first station in the transport direction of the flat good G, wherein each of the stations (1, 2) has at least a motor, an encoder (13, 26), and a sensor that are connected with a control unit (10, 20), wherein the control unit (10, 20) is programmed to implement a path control, **characterized by** the steps:
- provision of an encoder pulse counter (14) in the control unit (10) of the first station (1), and counting of the encoder pulses of the encoder (13) of the first station by means of the encoder pulse counter (14) of the control unit (10) of the first station,
- determination of an event by means of a first sensor (DW-S1) of the second station (2), and storage of an associated numerical value Z1 of the encoder pulse counter (14) in a first register (R1) of the control unit of the first station, wherein the event, which is determined by the sensor (AZ-S3) of the first station relates to the detection of the trailing edge of the flat good G,
- storage of a numerical value Z2 for a distance d between two sensors (AZ-S3, DW-S1) in a second register (R2) of the control unit (10) of the first station (1), wherein the sensors (AZ-S3 and DW-S1) belong to different and adjacent stations (1 and 2),
- determination of an event by means of the sensor (AZ-S3) of the first station, and storage of an associated numerical value Z3 of the encoder pulse counter 14 in a third register (R3) of the control unit (10) of the first station (1), wherein the event which is determined by the sensor (DS-S1) of the second station relates to the detection of the leading edge of the flat good G,
- summation of the numerical value Z2 and of the difference Δ = Z3 - Z1 of the counter states Z3 and Z1 by means of the control unit (10) of the first station (1) as soon as both events are present.

2. Method according to claim 1, **characterized in that** the distance d between two sensors (AZ-S3 and DW-S1) of adjacent stations (1, 2) is greater than the length of the smallest format Lmin and smaller than the length Lmedian of a medium format of the flat good.

3. Method according to claims 1 through 2, **characterized in that** the sensors (AZ-S3, DW-S1) are designed as photoelectric barriers (AZ-LS3, DW-LS1); **in that** a photoelectric barrier (AZ-S3) of the first station (1) detects the event when the trailing edge of the flat good G clears the photoelectric barrier (AZ-S3); and **in that** a photoelectric barrier (DW-LS1) of the second station (2) detects the event if the leading edge of the flat good G reaches photoelectric barrier (DW-LS1).

4. Method according to claim 1, **characterized in that** the numerical value Z2 stored in the second register (R2) is equal to a number of encoder pulses, wherein the number of encoder pulses corresponds to the distance d between two sensors or photoelectric barriers that belong to different and immediately adjacent stations (1) and (2).

5. Method according to claim 1, **characterized in that** a conversion of a number of encoder pulses by means of a function λ or k or δ into a length of the flat good in a predetermined measurement unit takes place by means of the control unit (10) of the first station (1).

6. Arrangement for implementation of the method in a goods processing system that has a first station (1) and a second station (2), wherein the first station is a supply station and the second station is a dynamic scale, wherein the second station (2) is arranged downstream of the first station in the transport direction of the flat good G, wherein each of the stations (1, 2) has at least a motor, an encoder (13, 26), and a sensor that are connected with a control unit (10, 20), wherein the control unit (10, 20) is programmed to implement a path control, **characterized in that**:
- a sensor (AZ-S3) of the first station (1) is provided to determine an event, and an encoder pulse counter (14) is provided in the control unit (10) of the first station (1), wherein the encoder pulse counter is designed to count the encoder pulses of the encoder (13) of the first station (1), and the event corresponds to an associated numerical value Z3 of the encoder pulse counter (14),
- a first sensor (DW-S1) of the second station (2) is provided to determine an event, and **in that** a first register (R1) of the control unit of the first station (1) is provided to store an associated numerical value Z1 of the encoder pulse counter (14), wherein the event which is determined by the sensor (DW-S1) of the second station relates to the detection of the leading edge of the flat good G,
- a second register (R2) of the control unit (10) of the first station (1) is provided to store a numerical value Z2 of for a distance d is provided between two sensors (AZ-S3, DW-S1), wherein the sensors (AZ-S3 or DW-S1) belong to different and adjacent stations (1 or 2),
- a third register (R3) of the control unit (10) of the first station (1) is provided to store the determined numerical value Z3 of the encoder pulse counter (14) that is associated with the event detected by the sensor (AZ-S3) of the first station (1), and
- the control unit (10) of the first station (1) is programmed to total up the numerical value Z2 and the difference Δ = Z3 - Z1 of the counter stations Z3 and Z1, wherein the sum is calculated as soon as both events are present.

7. Arrangement according to claim 6, **characterized in that** the sensors (AZ-S3, DW-S1) are designed as photoelectric barriers (AZ-LS3, DW-LS1).

8. Arrangement according to claim 6, **characterized in that** two transport rollers (132, 133) that are arranged in succession in the transport direction x in the first station are provided, wherein the two transport rollers are driven by a second motor (M12) of the first station (1); **in that** the axles of the two driven transport rollers (132 and 133) are situated parallel to the x-direction and at a distance c from one another, wherein the distance c is smaller than the length Lmin of the smallest format of the flat good G.

9. Arrangement according to claim 6, **characterized in that** control units of the stations of the goods processing system are connected with one another via a serial bus system.

10. Arrangement according to claim 6 and 9 **characterized in that** the serial bus system is a CAN bus.

11. Arrangement according to claim 6 through 10, **characterized in that** the goods processing system is a franking machine system, and the flat goods G are mail pieces such as letters in envelopes or postcards.

## Revendications

1. Procédé de mesure en longueur d'un produit plat dans un système de traitement de produits, pourvu d'un premier poste (1) et d'un deuxième poste (2), le premier poste étant un poste d'aménage et le deuxième poste étant une balance dynamique, le deuxième poste (2) étant placé en aval du premier poste dans la direction de transport du produit plat G, chacun des postes (1, 2) comportant au moins un moteur, un encodeur (13, 26) et un capteur qui sont connectés avec une unité de commande (10, 20), l'unité de commande (10, 20) étant programmée pour exécuter une gestion de course, comportant les étapes consistant à :
- prévoir un compteur d'impulsions d'encodeur (14) dans l'unité de commande (10) du premier poste (1) et compter les impulsions d'encodeur de l'encodeur (13) du premier poste, au moyen du compteur d'impulsions d'encodeur (14) de l'unité de commande (10) du premier poste,
- déterminer un événement au moyen d'un premier capteur (DW-S1) du deuxième poste (2) et mémoriser une valeur chiffrée Z1 associée du compteur d'impulsions d'encodeur (14) dans un premier registre (R1) de l'unité de commande du premier poste, l'événement lequel est déterminé par le capteur (AZ-S3) du premier poste concernant la détection de l'arête arrière du produit plat G,
- mémoriser une valeur chiffrée Z2 pour un écart d entre deux capteurs (AZ-S3, DW-S1) dans un deuxième registre (R2) de l'unité de commande (10) du premier poste (1), les capteurs (AZ-S3 ou DW-S1) faisant partie de différents postes directement voisins (1 ou 2),
- déterminer un événement au moyen du capteur (AZ-S3) du premier poste et mémoriser une valeur chiffrée Z3 associée du compteur d'impulsions d'encodeur 14 dans un troisième registre (R3) de l'unité de commande (10) du premier poste (1), l'événement lequel est déterminé par le capteur (DW-S1) du deuxième poste concernant la détection de l'arête avant du produit plat G,
- additionner la valeur chiffrée Z2 et la différence Δ = Z3 - Z1 des relevés de compteur Z3 et Z1 au moyen de l'unité de commande (10) du premier poste (1), dès que les deux événements sont présents.

2. Procédé selon la revendication 1, **caractérisé en ce que** l'écart d entre deux capteurs (AZ-S3 et DW-S1) de postes (1 et 2) voisins est supérieur à la longueur du plus petit format Lmin et inférieur à la longueur Lmedian d'un format moyen du produit plat.

3. Procédé selon les revendications 1 à 2, **caractérisé en ce que** les capteurs (AZ-S3, DW-S1) sont conçus sous la forme de barrières photoélectriques (AZ-LS3, DW-LS1), **en ce qu'**une barrière photoélectrique (AZ-LS3) du premier poste (1) détecte l'événement lorsque l'arête arrière du produit plat G libère la barrière photoélectrique (AZ-LS3) et **en ce qu'**une barrière photoélectrique (DW-LS1) du deuxième poste (2) détecte l'événement lorsque l'arête avant du produit plat G atteint la barrière photoélectrique (DW-LS1).

4. Procédé selon la revendication 1, **caractérisé en ce que** la valeur chiffrée Z2 mémorisée dans le deuxième registre (R2) est un nombre d'impulsions d'encodeur, le nombre des impulsions d'encodeur correspondant à l'écart d entre deux capteurs ou barrières photoélectriques qui font partie de postes (1) et (2) différents et directement voisins.

5. Procédé selon la revendication 1, **caractérisé en ce qu'**il s'effectue une conversion d'un nombre d'impulsions d'encodeur au moyen d'une fonction λ ou k ou δ en une longueur du produit plat dans une unité de mesure prédéfinie, au moyen de l'unité de commande (10) du premier poste (1).

6. Ensemble, destiné à réaliser le procédé dans un système de traitement de produits, qui comporte un premier poste (1) et un deuxième poste (2), le premier poste étant un poste d'aménage et le deuxième poste étant une balance dynamique, le deuxième poste (2) étant placé en aval du premier poste dans la direction de transport du produit plat G, chacun des postes (1, 2) comportant au moins un moteur, un encodeur (13, 26) et un capteur qui sont connectés avec une unité de commande (10, 20), l'unité de commande (10, 20) étant programmée pour exécuter une gestion de course,
- un capteur (AZ-S3) du premier poste (1) étant prévu pour déterminer un événement et un compteur d'impulsions d'encodeur (14) étant prévu dans l'unité de commande (10) du premier poste (1), le compteur d'impulsions d'encodeur étant conçu pour compter les impulsions d'encodeur de l'encodeur (13) du premier poste (1) et une valeur chiffrée Z3 associée du compteur d'impulsions d'encodeur (14) correspondant à l'événement,
- un premier capteur (DW-S1) du deuxième poste (2) étant prévu pour déterminer un événement et un premier registre (R1) de l'unité de commande du premier poste (1) étant prévu pour mémoriser une valeur chiffrée Z1 associée du compteur d'impulsions d'encodeur (14), l'événement, lequel est déterminé par le capteur (DW-S1) du deuxième poste concernant la détection de l'arête avant du produit plat G,
- un deuxième registre (R2) de l'unité de commande (10) du premier poste (1) étant prévu pour mémoriser une valeur chiffrée Z2 pour un écart d entre deux capteurs (AZ-S3, DW-S1), les capteurs (AZ-S3 ou DW-S1) faisant partie de différents postes (1 ou 2) directement voisins,
- un troisième registre (R3) de l'unité de commande (10) du premier poste (1) étant prévu pour mémoriser la valeur chiffrée Z3 du compteur d'impulsions d'encodeur (14) associée à l'événement détecté par le capteur (AZ-S3) du premier poste (1), l'événement, lequel est déterminé par le capteur (AZ-S3) du premier poste concernant la détection de l'arête arrière du produit plat G et
- l'unité de commande (10) du premier poste (1) étant programmée pour totaliser la valeur chiffrée Z2 et la différence Δ = Z3 - Z1 des relevés de compteur Z3 et Z1, le total étant créé dès que les deux événements sont présents.

7. Ensemble, selon la revendication 6, **caractérisé en ce que** les capteurs (AZ-S3, DW-S1) sont conçus sous la forme de barrages photoélectriques (AZ-LS3, DW-LS1).

8. Ensemble, selon la revendication 6, **caractérisé en ce que** deux rouleaux transporteurs (132, 133) placés successivement dans la direction de transport x dans le premier poste sont prévus, les deux rouleaux transporteurs étant entraînés par un deuxième moteur (M12) du premier poste (1), **en ce que** les axes des deux rouleaux transporteurs (132 et 133) entraînés se situent à la parallèle de la direction x et avec un écart mutuel c, l'écart c étant inférieur à la longueur Lmin du plus petit format du produit plat G.

9. Ensemble, selon la revendication 6, **caractérisé en ce que** des unités de commande des postes du système de traitement des produits sont connectés les uns aux autres par l'intermédiaire d'un système de bus série.

10. Ensemble, selon les revendications 6 et 9, **caractérisé en ce que** le système de bus série est un bus CAN.

11. Ensemble, selon les revendications 6 et 10, **caractérisé en ce que** le système de traitement des produits est un système d'affranchisseuse et **en ce que** les produits plats G sont des envois postaux, comme des lettres sous enveloppe ou des cartes postales.
